# EUROPEAN PATENT APPLICATION

(11) **EP 2 764 942 A1**
(43) Date of publication of application: **13.08.2014**
(21) Application number: 13192541.4
(22) Date of filing: 12.11.2013
(51) Int. Cl.: B23D 31/00, B23D 35/00

(54) **Device for breaking and/or cutting material, as well as a piercing element suitable for being mounted on the free nose end of a jaw of such a device**

(30) Priority: 14.11.2012 NL 2009807
(71) Applicant: Demolition and Recycling Equipment B.V., 5845 EL St. Anthonis (NL)
(72) Inventor: De Gier, Gertrudis Maria Gerardus, 5331 CP KERKDRIEL (NL)
(74) Representative: Algemeen Octrooi- en Merkenbureau B.V.

(57) **Abstract**

The invention relates to a device for breaking and/or cutting material, comprising a frame (10) to be coupled to the boom of an excavation machine or the like, a first jaw (13) provided with a first cutting surface, which takes up a fixed position relative to the frame (10) in use, a second jaw (14) provided with a second cutting surface (14a) and a free nose end (14b), which second jaw (14) works together with the first jaw (13) and which is pivotable about a pivot relative to the frame (10), toward and away from the first jaw (13), wherein the second jaw (14) is provided with an exchangeable piercing element (15) at its free nose end (14b) for piercing the material to be broken and/or cut.

The piercing element (15) is made up of two element parts (150a, 150b), which element parts (150a, 150b) can be mounted on the free nose end (14b) on either side thereof, and wherein each element part (150a, 150b) is made up of a piercing part (151a, 151b), which abuts against the corresponding piercing part (151a, 151b) of the other element part (150a, 150b), and a flange part (157a, 157b) that extends along the free nose end (14b).

## Description

The invention relates to a device for breaking and/or cutting material, comprising a frame to be coupled to the boom of an excavation machine or the like, a first jaw provided with a first cutting surface, which takes up a fixed position relative to the frame in use, a second jaw provided with a second cutting surface and a free nose end, which second jaw works together with the first jaw and which is pivotable about a pivot relative to the frame, toward and away from the first jaw, wherein the second jaw is provided with an exchangeable piercing element at its free nose end for piercing the material to be broken and/or cut, wherein the piercing element is made up of two element parts, which element parts can be mounted on the free nose end on either side thereof, and wherein each element part is made up of a piercing part, which abuts against the corresponding piercing part of the other element part, and a flange part that extends along the free nose end.

The invention also relates to a piercing element suitable for being mounted on the free nose end of a jaw of a device according to the invention for breaking and/or cutting material.

Such a device, also called scrap cutter, is known, for example from Dutch patent application no. 8902608 or from US patent application US 2004/0093739, it is used for cutting and reducing in particular metal scrap (sheets, iron sections, cables, etc.). One of the cutting jaws, preferably the pivotable cutting jaw, is provided with a detachable piercing element (also called piercing tip), which is made of a hardened (tool) steel. Whilst the cutting jaws are used for working metal scrap, the piercing element is used for piercing sheets and sections, so that large pieces of sheet metal can be cut. A piercing element can also function to guide the pivotable jaw between the cutting surfaces of the first, fixed jaw.

The piercing element from US 2004/0093739 is made up of two parts and is mounted on the pivotable jaw. Extreme forces exerted during use create mechanical problems, in particular at the location where the piercing element is mounted (screwed) to the cutting jaw. Bad or incorrect use of a scrap cutter provided with such a piercing element can lead to the piercing element breaking off and/or to the free nose end of the second, pivotable cutting jaw being deformed by asymmetrical forces, as a consequence of which the functionality and eventually the life of the scrap cutter will be adversely affected. In particular if mechanical forces cannot be absorbed sufficiently symmetrically and be deflected via the frame, high material stresses can concentrate in one point of attachment of the piercing element to the cutting jaw, resulting in local deformation (liquefaction) of the (metal) material near the specific point of attachment.

The deformation of the piercing element and/or the free nose end of the pivotable cutting jaw can lead to the pivotable cutting jaw blocking between the cutting surfaces of the first, fixed cutting jaw, resulting in a total failure, if not write-off, of the scrap cutter.

The object of the invention is to obviate the above drawbacks and to provide a device (scrap cutter) as described in the introduction which is provided with a piercing element, which device on the one hand is of simple construction and which furthermore is better capable of withstanding the forces that occur, thus preventing deformation of or damage to the piercing element and/or the cutting jaw.

In order to prevent the two flange parts moving relative to each other and to the free nose end and deforming as a result of the forces that occur, the two piercing parts as well as the free nose end are according to the invention provided with coinciding slots, in which a locking pin can be received. The locking pin provides a form-locked whole consisting of the two separate piercing parts and the free nose end of the cutting jaw, as a result of which movement of the piercing parts relative to the free nose end and relative to each other caused by (asymmetrical) forces is prevented.

The piercing parts of the two element parts can be connected together so as to obtain correct dimensions and realise a form-locked contact surface for breaking and/or cutting the scrap material. Not only does this make mounting easier, but in addition to that forces will be absorbed and deflected more efficiently.

Furthermore, in order to make an efficient deflection of forces from the construction possible, the flange parts of the two element parts and also the nose end are provided with through holes, in which fixing bolts can be received.

In order to prevent the piercing element from becoming detached from the free nose end as a result of deformation caused by the forces that occur, the through holes are in a straight line with the coinciding slots.

In order to achieve an effective form-locked retainment of the piercing element relative to the free nose end, the device is **characterised in that** the flange part that extends along the free nose end can be received in a recess formed in the free nose end.

More specifically, in a functional embodiment the two piercing parts abut against the side of the free nose end that faces the first jaw, thus forming a contact surface which not only protects the free nose end but which also effectively deflects forces.

The invention will now be explained in more detail with reference to a drawing, in which:
Figure 1 shows a device for breaking and/or cutting material, which is provided with a piercing element according to the invention;
Figure 2 shows an embodiment of a piercing element according to the invention;
Figure 3 is an exploded view of a piercing element according to the invention;
Figure 4 is a view of a piercing element according to the invention in assembled position;
Figure 5 is a detail view of the free nose end of a cutting jaw of a device according to figure 1 provided with a piercing element according to the invention.

For a better understanding of the invention, like parts will be indicated by the same numerals in the description of the figures below.

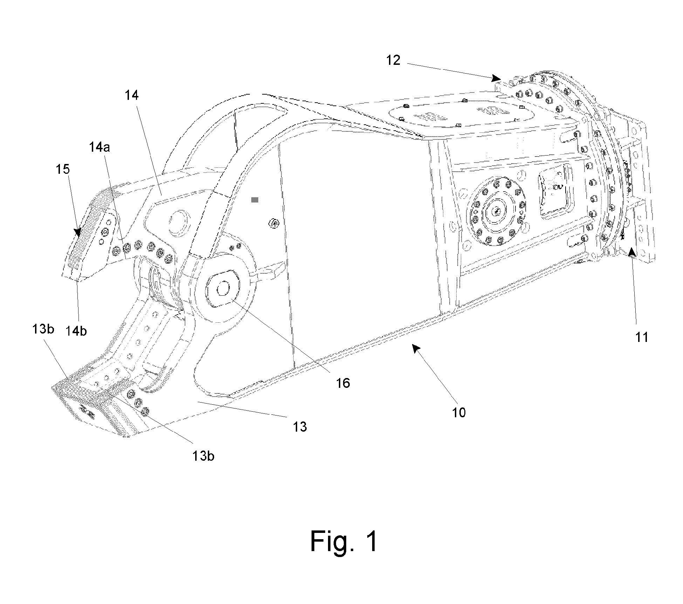

Figure 1 discloses a device according to the invention for breaking and/or cutting material. The device comprises a frame 10 provided with a connecting plate 11, by means of which the frame can be connected to a boom (not shown) of an excavation machine. The connecting plate 11 is optionally provided with a rotary part 12, so that the frame 10 can be rotated to any desired position.

The frame 10 is provided with a first jaw 13, which takes up a fixed position relative to the frame 10. The first jaw 13 is provided with cutting surfaces 13a and 13b. The frame 10 is also provided with a second jaw 14, which is pivotable relative to the frame about a pivot 16. The second jaw is likewise provided with at least one cutting surface 14a.

Using suitable hydraulic driving means, the frame 10 can on the one hand be rotated by means of the rotary part 12, but it is also possible to move the second jaw 14 towards and away from the first jaw 13, during which movement the second jaw 14 pivots about the pivot 16.

Material clamped between the two jaws 13 and 14 can thus be cut or broken by means of the various cutting surfaces 13a-13b-14a.

The free nose end 14b of the second jaw 14 is provided with an exchangeable piercing element 15. Such an exchangeable piercing element is generally made of a hardened type of steel and is suitable for piercing material, in particular metal sheets or sections, in order to make cutting by the two jaws 13 and 14 possible.

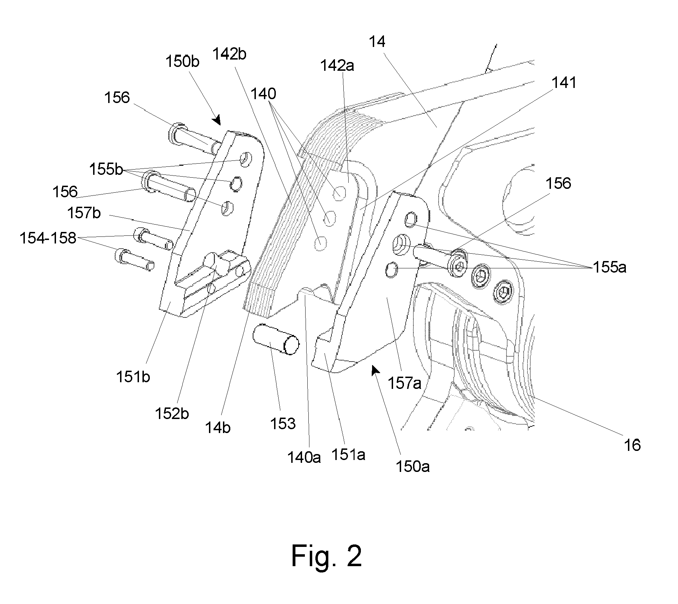

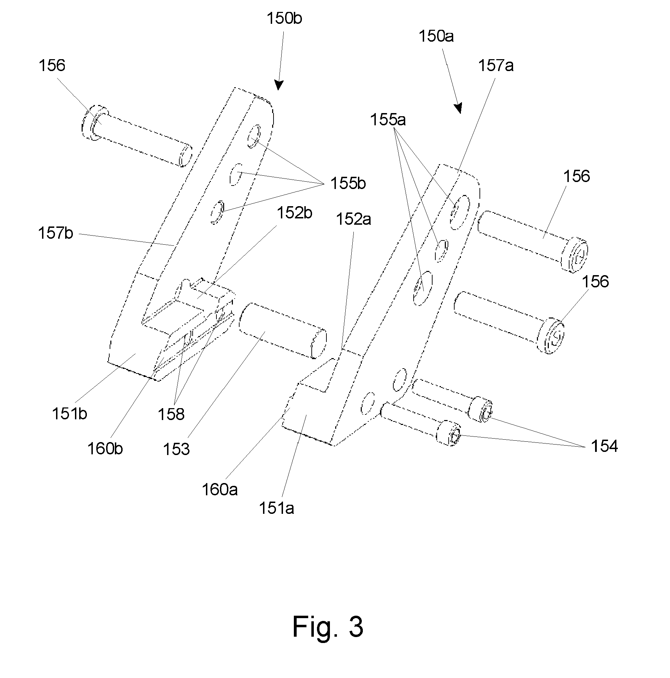

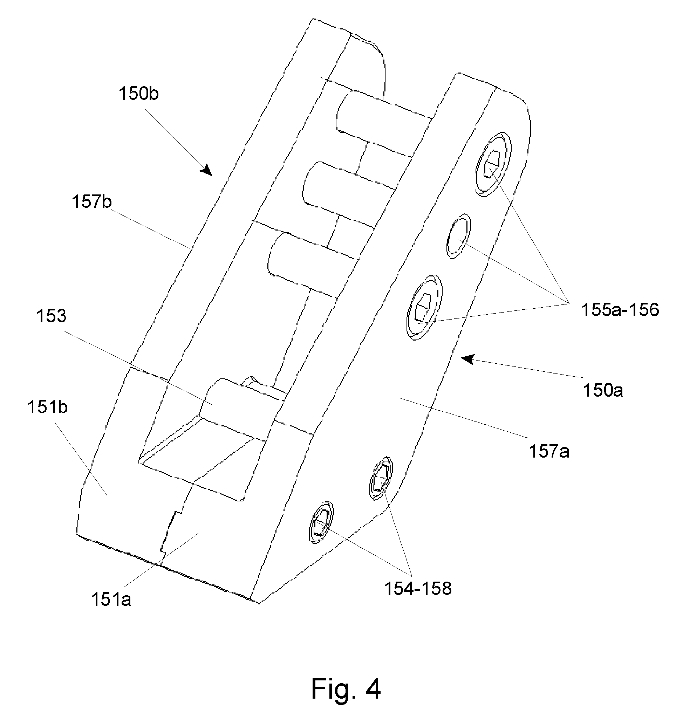

As shown in figures 2, 3 and 4, the piercing element 15 is made up of two element parts 150a-150b, which can be mounted on either side of the free nose end 14b. Each element part 150a-150b is made up of a piercing part 151a-151b, which piercing parts each blend into a flange part 157a-157b.

As clearly shown in figure 2, the two element parts 150a-15b are mounted on the free nose end 14b of the second jaw 14 in such a manner that the two piercing parts 151a-151b surround the free nose end while abutting against each other. The flange parts 157a-157b also extend along the free nose end 14b. The second jaw 14 is to that end provided with recesses 142a and 142b, respectively, near the free nose end, each recess being bounded by an upright edge 141 in which the respective flange parts 157a and 157b fit. The upright edge 141 of each recess 142a-142b functions as an abutment edge for the two flange parts, so that forces exerted on the piercing element 15 can be effectively deflected to the second jaw 14 without the risk of displacement or deformation of the two element parts 150a-150b.

To make suitable mounting possible, the two flange parts 157a-157b are provided with holes 155a-155b, which holes coincide with corresponding holes 140 in the free nose end 14b of the second jaw 14. The holes 155a-155b may or may not be provided with an internal screw thread, which is to mate with a bolt 156. Likewise, the two piercing parts 151a-151b are provided with holes 158, in which bolts 154 can be received.

In order to prevent the two element parts from becoming detached during use as a result of the forces being exerted and due to displacement or deformation of the material at the location of the mounting holes, the piercing element is provided with a locking pin 153, which can be received in slots 152a-152b formed in each element part 150a, 150b, respectively, and a slot 140a formed in the free nose end 14b of the second jaw 14. The slots 152a-152b and 140a are positioned to coincide when the two element parts are mounted on the free nose end, thus forming a cylindrical chamber in which the locking pin 153 can be received. The locking pin 153 is configured as a cylindrical member having external dimensions identical to the internal dimensions of the cylindrical chamber that is formed by the semi-cylindrical slots 152a-152b. With regard to another embodiment it is noted that the holes 155a and 155b, respectively, are in a straight line with the position of the locking pin 153 in the cylindrical chambers formed by the slots 152a-152b and 140a.

This prevents deformation and detachment of the connection of the two element parts in the recess 142a-142b of the cutting jaw 14.

The two element parts 150a and 150b are provided with mating, interlocking profiles for additionally locking the two element parts together during mounting and preventing the two elements parts from moving relative to each other. More specifically, said profiles 160a-160b are provided in the abutting - during mounting - surfaces of the piercing parts 151a-151b. The mating profiles consist of a recess 160a and a raised part 160b, which extend over the two abutting faces of the piercing parts 151a-151b. During mounting, the raised part 160b slips into the recess 160a, thereby additionally retaining the element parts 150a-150b and securing them against the (shearing) forces acting thereon.

The mating profiles 160a-160b may of course also consist of projections (formed on the contacting surface of one piercing part) which - during mounting - slip into corresponding openings (formed in the contact surface of the other piercing part).

Being mounted on the free nose end 14b of the cutting jaw 14, the two element parts 150a-150b thus form a stable, form-locked shoe construction. It is preferable to place the two element parts 150a-150b on the free nose end 14b simultaneously with the locking pin 153. This ensures a good mechanical, form-locked retainment of the individual parts.

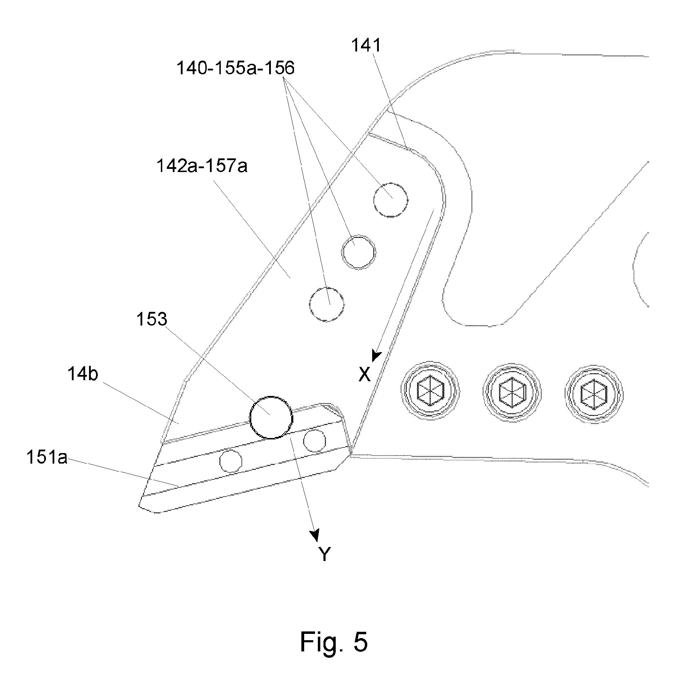

Since the locking pin 153 is located on the contact surface between the piercing parts 151a-151b and the end that faces the first jaw 13, an adequate retainment is thus ensured and unintentional detachment of the piercing element from the free nose end 14b (due to the forces being exerted in use) is prevented. As it is, a solid and firm, form-locked construction is thus obtained. The piercing element 15 can only be moved out of the recess 142a and along the upright edge 141 in the direction X (see arrow X in figure 5), but because of the presence of the locking pin 153, which only allows movement in the direction Y (arrow Y in figure 5), the piercing element 15 cannot move in any direction, barring splitting into parts or deforming. The latter is prevented by the presence of the bolts 154-156.

This manner of mounting and retainment on the free nose end 14b also makes it possible to place the bolts 156 and the associated holes 140-155a-155b relatively far from the free nose end 14b, so that the overall construction will thus not be unnecessarily weakened. After all, the free nose end 14b directly adjacent to the element parts 150a-15b is that part of the moving cutting jaw 14 where extreme material stresses occur, and by placing the holes 140-155a-155b, which in fact weaken the material, as far away from the free nose end 14b as possible, the load on the free nose end 14b will be reduced as much as possible.

The element parts 150a-150b are connected together over the free nose end 14b by means of bolts 154, which bolts (in contrast to the bolts 156) do not extend through the free nose end 14b, however.

## Claims

1. A device for breaking and/or cutting material, comprising
a frame to be coupled to the boom of an excavation machine or the like,
a first jaw provided with a first cutting surface, which takes up a fixed position relative to the frame in use,
a second jaw provided with a second cutting surface and a free nose end, which second jaw works together with the first jaw and which is pivotable about a pivot relative to the frame, toward and away from the first jaw, wherein
the second jaw is provided with an exchangeable piercing element at its free nose end for piercing the material to be broken and/or cut,
wherein the piercing element is made up of two element parts, which element parts can be mounted on the free nose end on either side thereof, and wherein each element part is made up of a piercing part, which abuts against the corresponding piercing part of the other element part, and a flange part that extends along the free nose end, **characterised in that** the two piercing parts as well as the free nose end are provided with coinciding slots, in which a locking pin can be received.

2. A device according to claim 1, **characterised in that** the piercing parts of the two element parts can be connected together.

3. A device according to one or more of the preceding claims, **characterised in that** the flange parts of the two element parts and also the nose end are provided with through holes, in which fixing bolts can be received.

4. A device according to claim 3, **characterised in that** the through holes are in a straight line with the coinciding slots.

5. A device according to one or more of the preceding claims, **characterised in that** the flange part that extends along the free nose end can be received in a recess formed in the free nose end.

6. A device according to one or more of the preceding claims, **characterised in that** the two piercing parts abut against the side of the free nose end that faces the first jaw.

7. A device according to one or more of the preceding claims, **characterised in that** the two piercing parts are provided with interlocking profiles.

8. A piercing element suitable for being mounted on the free nose end of a jaw of a device for breaking and/or cutting material according to one or more of claims.
